# EUROPÄISCHE PATENTSCHRIFT

(11) **EP 3 403 734 B1**
(45) Veröffentlichungstag und Bekanntmachung des Hinweises auf die Patenterteilung: **17.08.2022**
(21) Anmeldenummer: 18171565.7
(22) Anmeldetag: 09.05.2018
(51) Int. Cl.: B08B 15/04, B23D 59/00, B23Q 11/00

(54) **PLATTENAUFTEILEINRICHTUNG, SOWIE VERFAHREN ZUM BETREIBEN EINER PLATTENAUFTEILEINRICHTUNG**
PANEL-DIVIDING DEVICE AND METHOD FOR OPERATING A PANEL-DIVIDING DEVICE
INSTALLATION DE DIVISION DE PLAQUES AINSI QUE PROCÉDÉ DE FONCTIONNEMENT D'UNE INSTALLATION DE DIVISION DE PLAQUES

(30) Priorität: 19.05.2017 DE 102017110981
(43) Veröffentlichungstag der Anmeldung: 21.11.2018
(73) Patentinhaber: HOMAG Plattenaufteiltechnik GmbH, 75365 Calw (DE)
(72) Erfinder: Martynenko, Sergey, 71083 Herrenberg (DE); Kaiser, Jonathan, 71131 Jettingen (DE); Blaich, Marcus, 75365 Calw-Stammheim (DE)
(74) Vertreter: DREISS Patentanwälte PartG mbB

(56) Entgegenhaltungen:
- WO-A1-2009/011454
- DE-A1-102013 020 820
- DE-U1-202010 004 119
- FR-A1- 2 735 057
- US-A- 3 135 151

## Beschreibung

Die Erfindung betrifft eine Plattenaufteileinrichtung nach dem Oberbegriff des Anspruchs 1, sowie ein Verfahren zum Betreiben einer Plattenaufteileinrichtung nach dem Oberbegriff des nebengeordneten Patentanspruchs.

Die DE 199 33 852 A1 beschreibt eine Werkstückbearbeitungsanlage, bei der bei der Bearbeitung des Werkstücks mittels eines rotierenden Werkzeugs Partikel in Form von Spänen erzeugt werden. Diese Späne bewegen sich von einem Bearbeitungsbereich in einer ersten Flugrichtung weg. Das Werkzeug ist stationär, wohingegen sich das Werkstück bewegt. Oberhalb von dem Bearbeitungsbereich ist eine Absaughaube angeordnet. Um einen Austritt von Spänen aus der Absaughaube zu verhindern, ist eine Leiteinrichtung in Form eines plattenartigen Leitelements vorgesehen, welches die Partikel aus der ersten Flugrichtung in eine zweite Flugrichtung ablenkt, wodurch diese zu einer Absaugöffnung gelangen. Um zu verhindern, dass dann, wenn das Werkstück die Absaughaube passiert, Späne aus der Werkstückbearbeitungsanlage austreten, kann die Position des Leitelements verändert werden.

Ferner ist es von auf dem Markt befindlichen Plattenaufteilsägen her bekannt, einen beim Sägen entstehenden Spänestrahl durch fest angebrachte Leiteinrichtungen in Form von Späneleitblechen einzugrenzen und in Richtung zu einem Spänekanal zu leiten. Insbesondere die Richtung des Spänestrahls ist von einer bestimmten Position des Werkzeugs relativ zum Werkstück, nämlich von der Eintauchtiefe, sowie von der Position einer meist vorhandenen Vorritzsäge abhängig.

Das DE 20 2010 004 119 U1 beschreibt eine Plattenaufteilanlage mit Durchlasskanälen für Späne. Die DE 10 2013 020 820 A1 offenbart eine Absaugeinrichtung, bei der ein Fräsbereich von der Seite her mit Luft angeblasen wird, die dann wieder abgesaugt wird. Das US 3 135 151 betrifft einen Stutzen mit einer unbeweglichen Leiteinrichtung für eine Vorrichtung zum Schneiden von Papier. Die FR 2 735 057 A1 zeigt eine unbewegliche Leiteinrichtung für Späne. Die WO 2009/01145 A1 beschreibt einen Trennschleifer mit einer beweglichen Staubschutzhaube.

Aufgabe der vorliegenden Erfindung ist es, eine Plattenaufteileinrichtung zu schaffen, die sehr flexibel betrieben werden kann und bei der die bei der Bearbeitung anfallenden Partikel möglichst vollständig abgeführt werden.

Die genannte Aufgabe wird durch eine Plattenaufteileinrichtung mit den Merkmalen des Anspruchs 1 gelöst. Vorteilhafte Weiterbildungen der Erfindung sind in Unteransprüchen genannt. Darüber hinaus finden sich für die Erfindung wesentliche Merkmale in der nachfolgenden Beschreibung und in der beigefügten Zeichnung, wobei diese Merkmale für die Erfindung wesentlich sein können, ohne dass hierauf nochmals explizit hingewiesen werden wird.

Die erfindungsgemäße Plattenaufteileinrichtung umfasst ein rotierendes Werkzeug in Form eines Kreissägeblatts oder eines Fräsers. Ferner umfasst sie eine Leiteinrichtung, welche mindestens einen Teil der Partikel, die bei der Werkstückbearbeitung durch das rotierende Werkzeug in einem Bearbeitungsbereich erzeugt werden und die sich von dem Bearbeitungsbereich in einer ersten Flugrichtung meist in Form eines diskreten und sich vom Bearbeitungsbereich weg aufweitenden Partikelstrahls weg bewegen, aus der ersten Flugrichtung mindestens mittelbar in eine zweite Flugrichtung lenkt. Eine Position und/oder Lage der Leiteinrichtung ist mittels einer Einstelleinrichtung einstellbar. Die Einstelleinrichtung kann die Position und/oder Lage der Leiteinrichtung abhängig von einer Werkstückeigenschaft und/oder einer Werkzeugeigenschaft einstellen.

Erfindungsgemäß wurde erkannt, dass sich die erste Flugrichtung der Partikel, mit der die Partikel in der Art eines Partikelstrahls vom Bearbeitungsbereich weg fliegen, ändert, wenn sich bestimmte Werkstückeigenschaften und/oder Werkzeugeigenschaften ändern. Bei einer starren Leiteinrichtung würde dies dazu führen, dass sich auch die zweite Flugrichtung der Partikel bzw. eine Längsachse des entsprechenden Partikelstrahls ändert, denn der Winkel, S.4 unter dem die Partikel von der Leiteinrichtung abgelenkt werden, hängt vor allem von dem Winkel ab, unter dem die Partikel auf die Leiteinrichtung treffen. Bei einer starren Leiteinrichtung könnte dies dazu führen, dass bei bestimmten Werkstückeigenschaften und/oder Werkzeugeigenschaften mindestens ein erheblicher Anteil an Partikeln nicht an einen gewünschten Ort, beispielsweise zu einer Absaugeinrichtung, gelangt.

Diese Nachteile werden bei der vorliegenden Erfindung vermieden, denn durch die Einstellbarkeit der Position und/oder der Lage der Leiteinrichtung abhängig von bestimmten Werkstückeigenschaften und/oder Werkzeugeigenschaften können die Partikel bei praktisch jeder Werkstückeigenschaft und/oder Werkzeugeigenschaft von der Leiteinrichtung in einer gewünschten Weise, beispielsweise in eine bestimmte Richtung bzw. zu einem gewünschten Ort hin gelenkt werden. Ist beispielsweise eine Absaugeinrichtung vorhanden, können die Partikel so gelenkt werden, dass sie zumindest zu einem großen Teil zu der Absaugeinrichtung gelangen. Dies ermöglicht es, die Partikel mit geringerem Volumenstrom bzw. geringeren Geschwindigkeit des Absaugstroms zu erfassen. Dabei kann durch die Erfindung insbesondere verhindert werden, dass Partikel unter einem solch stumpfen Winkel auf die Leiteinrichtung prallen, dass sie von dort abprallen und somit nicht oder zumindest nur unzureichend weitergeleitet werden und hierdurch die Leiteinrichtung an jener Stelle, an der die Partikel in stumpfem Winkel aufprallen, stark ausgewaschen und hierdurch in besonderer Weise verschlissen wird. Insgesamt wird durch die Erfindung eine optimale Leitung der Partikel in jedem Betriebszustand der Plattenaufteileinrichtung realisiert. Ein Verschleiß der Leiteinrichtung und an den sie umgebenden Strukturen wird reduziert. Indem die Partikel erfindungsgemäß besonders effizient und vollständig erfasst werden können, kann darüber hinaus der Energieverbrauch für die Erfassung der Partikel, beispielsweise für eine Absaugeinrichtung, reduziert werden.

Bei Plattenaufteileinrichtungen hängt die Eintauchtiefe des Werkzeugs in das Werkstück unter anderem von der Dicke des Werkstücks ab, welches beispielsweise eine einzelne flache und dünne Platte sein kann, oder ein insgesamt relativ dicker Stapel aus einer Mehrzahl einzelner flacher und dünner Platten. Bei einer solchen Plattenaufteileinrichtung sind die erfindungsgemäßen Merkmale besonders prägnant.

Es versteht sich, dass unter dem Begriff der "Partikel" jegliche Art von bei einer Werkstoff abtragenden Bearbeitung entstehenden Partikeln gemeint ist, also beispielsweise Späne, Staub, etc. Die "mindestens mittelbare" Umlenkung aus der ersten Flugrichtung in die zweite Flugrichtung bedeutet, dass die Partikel eventuell zunächst aus der ersten Flugrichtung noch in eine Zwischenrichtung oder in mehrere Zwischenrichtungen abgelenkt werden können, bevor sie letztlich in die zweite Flugrichtung gelenkt werden, welche sie beispielsweise einer Absaugeinrichtung zuführt. Es sind grundsätzlich also auch Mehrfachumlenkungen möglich. Ist eine Absaugeinrichtung vorhanden, kann durch diese eine Absaugung aus einer bestimmtem Richtung realisiert werden. Diese Richtung wird als "Absaugrichtung" bezeichnet, und sie kann eine Richtung eines Absaugstroms in einem Absaugkanal sein oder eine Richtung unmittelbar vor einer Absaugöffnung, beispielsweise an einem Absaugstutzen, in der Nähe des Werkzeuges.

Die oben erwähnte Werkzeugeigenschaft ist vorzugsweise eine Eintauchtiefe des Werkzeugs in das Werkstück, eine Drehgeschwindigkeit des Werkzeugs, eine Vorschubgeschwindigkeit des Werkzeugs, eine Abmessung des Werkzeugs und/oder eine Geometrie des Werkzeugs, insbesondere eine Geometrie einer Schneide oder eines Sägeblattzahns. Die oben erwähnte Werkstückeigenschaft ist beispielsweise eine Art eines Werkstückmaterials, eine Dichte des Werkstückmaterials und/oder eine Abrasivität des Werkstückmaterials.

In einer Weiterbildung der Erfindung wird vorgeschlagen, dass mittels einer Verstelleinrichtung eine Eintauchtiefe des Kreissägeblatts oder des Fräsers in das Werkstück eingestellt werden kann, wodurch sich die erste Flugrichtung ändert. Hierdurch wird der Tatsache Rechnung getragen, dass besonders bei einer Werkstückbearbeitung durch ein Kreissägeblatt oder einen Fräser ein besonders prägnanter Partikelstrahl erzeugt wird, dessen Richtung und Lage von der Eintauchtiefe des Kreissägeblatts oder des Fräsers in das Werkstück abhängt.

Möglich ist ferner, dass die Plattenaufteileinrichtung einen Werkzeugwagen umfasst, an dem das Werkzeug drehbar angeordnet ist und der relativ zum Werkstück beweglich ist, und dass die Leiteinrichtung an dem Werkzeugwagen angeordnet ist. Ein solcher Werkzeugwagen wird durch die erfindungsgemäße Leiteinrichtung besonders gut vor zusätzlichem Verschleiß geschützt.

Eine konstruktiv besonders einfach realisierbare Lösung der Erfindung sieht vor, dass die Leiteinrichtung eine Mehrzahl von plattenförmigen, insbesondere geraden und/oder wenigstens abschnittsweise gekrümmten Leitelementen umfasst.

Dabei kann die Leiteinrichtung mindestens ein erstes Leitelement in unmittelbarer Nähe zu einer Austrittstelle des Werkzeugs aus dem Werkstück umfassen. Hierdurch wird ein Partikelstrahl in einem im Allgemeinen noch wenig aufgefächerten Zustand und daher auch bei einem vergleichsweise kleinen Leitelement besonders effizient umgelenkt. S.8

Möglich ist aber auch, dass die Leiteinrichtung mindestens ein zweites Leitelement in unmittelbarer Nähe zu einem gewünschten Ort, beispielsweise der Einlassöffnung einer Absaugeinrichtung umfasst. Somit können auch beispielsweise turbulent und sich insoweit chaotisch bewegende Partikel zuverlässig zu der Einlassöffnung gelangen.

Besonders vorteilhaft ist eine Kombination aus erstem Leitelement und zweitem Leitelement, bei der das erste Leitelement so ausgebildet und anordenbar ist, dass es wenigstens zeitweise Partikel aus der ersten Richtung in eine Zwischenrichtung umlenkt, und bei der das zweite Leitelement so ausgebildet und anordenbar ist, dass es die in die Zwischenrichtung umgelenkten Partikel in die zweite Richtung, beispielsweise zu einer Einlassöffnung einer Absaugeinrichtung hin umlenkt. Auf diese Weise werden die bei der Bearbeitung entstehenden Partikel nahezu vollständig an den gewünschten Ort gelenkt.

In Weiterbildung hierzu wird vorgeschlagen, dass das erste und/oder das zweite Leitelement schwenkbar und/oder translatorisch verschieblich sind/ist. Dies ist konstruktiv einfach zu realisieren. Ein sich bei einer Bewegung des Werkzeugs bildender Spalt zwischen der Absaugeinrichtung und dem Werkzeug kann durch ein sich translatorisch verschiebendes zweites Leitelement gut und einfach verschlossen werden.

Besonders bevorzugt ist es, wenn die Einstelleinrichtung der Leiteinrichtung mit einer Verstelleinrichtung des Werkzeugs mechanisch oder elektrisch oder pneumatisch oder hydraulisch gekoppelt ist. Sehr einfach ist eine mechanische Kopplung, welche zwangsweise zu einer Änderung der Position und/oder der Lage der Leiteinrichtung für, sobald mittels der Verstelleinrichtung beispielsweise eine Eintauchtiefe des Werkzeugs relativ zum Werkstück verändert wird. Besonders praktisch und flexibel ist dagegen eine elektrische Koppelung, wobei hierunter beispielsweise verstanden wird, dass eine Steuer- und/oder Regeleinrichtung die Einstelleinrichtung abhängig von einer erfassten oder ermittelten Eintauchtiefe des Werkzeugs relativ zum Werkstück ansteuert.

Die Leiteinrichtung umfasst vorzugsweise mindestens einen eigenen Antrieb. Hierdurch wird die Flexibilität im Betrieb der Anlage verbessert.

In Weiterbildung hierzu wird vorgeschlagen, dass der Antrieb von einer Steuer- und/oder Regeleinrichtung in Abhängigkeit von der Werkstückeigenschaft und/oder der Werkzeugeigenschaft, insbesondere abhängig von einer Eintauchtiefe des Werkzeugs in das Werkstück, einer Drehgeschwindigkeit des Werkzeugs, einer Vorschubgeschwindigkeit des Werkzeugs, einer Abmessung des Werkzeugs und/oder einer Geometrie des Werkzeugs, insbesondere einer Geometrie einer Schneide oder eines Sägeblattzahns, einer Art eines Werkstückmaterials, einer Dichte des Werkstückmaterials und/oder einer Abrasivität des Werkstückmaterials ansteuerbar ist. Dies erleichtert die Bedienbarkeit der Plattenaufteileinrichtung und gestattet unter Umständen sogar eine vollautomatische und sehr flexible Einstellung der Leiteinrichtung abhängig von der Werkstückeigenschaft und/oder der Werkzeugeigenschaft.

Dabei ist es besonders vorteilhaft, wenn die Leiteinrichtung zwischen einer Hauptsäge und einer Vorritzsäge angeordnet ist. Dies ist jener Bereich, in dem besonders viele Partikel anfallen. Darüber hinaus rotieren Hauptsäge und Vorritzsäge meist gegenläufig, so dass an dieser Stelle sowohl der von der Hauptsäge herrührende Partikelstrahl als auch der von der Vorritzsäge herrührende Partikelstrahl gelenkt werden kann. Einer Hauptsäge und einer Vorritzsäge kann jeweils mindestens eine eigene Leiteinrichtung zugeordnet sein. Dies gestattet eine individuelle und daher besonders effiziente Lenkung des Partikelstrahls.

Alternativ oder zusätzlich ist es aber auch möglich, dass einer Hauptsäge und einer Vorritzsäge mindestens eine gemeinsame Leiteinrichtung zugeordnet ist. Hierdurch werden Kosten gespart, und auch der Bauraum wird reduziert.

Nachfolgend werden Ausführungsformen der Erfindung unter Bezugnahme auf die beigefügte Zeichnung erläutert. In der Zeichnung zeigen:
- Figur 1: eine schematische Draufsicht auf eine Plattenaufteileinrichtung;
- Figur 2: eine Seitenansicht auf einen Werkzeugwagen der Plattenaufteileinrichtung von Figur 1, wobei sich ein Werkzeug sowie eine erste Ausführungsform einer Leiteinrichtung jeweils in ersten Positionen befinden;
- Figur 3: eine Darstellung ähnlich zu Figur 2, wobei sich das Werkzeug sowie die Leiteinrichtung jeweils in zweiten Positionen befinden; und
- Figur 4: eine Darstellung ähnlich zu Figur 2 mit einer zweiten Ausführungsform einer Leiteinrichtung; und
- Figur 5: eine Darstellung ähnlich zu Figur 2 mit einer dritten Ausführungsform einer Leiteinrichtung.

In unterschiedlichen Ausführungsformen tragen funktionsäquivalente Elemente und Bereiche nachfolgend die gleichen Bezugszeichen. Sie werden im Normalfall nicht nochmals im Detail erläutert werden.

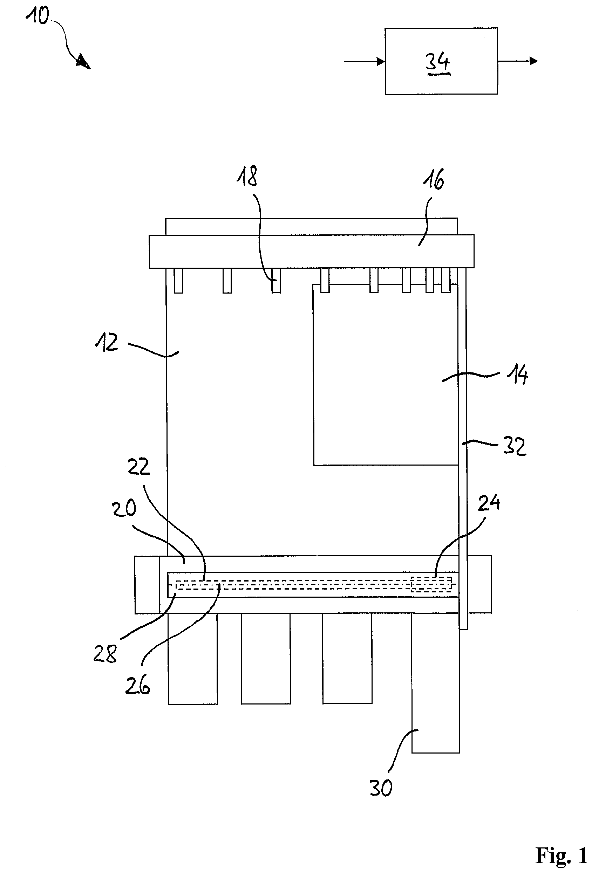

In Figur 1 trägt eine Plattenaufteileinrichtung zur Aufteilung von großformatigen Platten, wie sie beispielsweise in der Möbelindustrie eingesetzt werden, insgesamt das Bezugszeichen 10. Bei der Plattenaufteileinrichtung handelt es sich vorliegend beispielhaft um eine Plattenaufteilsäge. Anstelle einer Säge könnte aber auch eine Fräseinrichtung vorgesehen sein. Die in Figur 1 gezeigte Plattenaufteileinrichtung 10 umfasst einen Zuführtisch 12, auf dem ein einzelnes plattenförmiges Werkstück 14 oder ein Stapel 14 aus plattenförmigen Werkstücken auflegen kann. Ferner umfasst sie eine Fördereinrichtung in Form eines portalartigen Programmschiebers 16, an dem eine Mehrzahl von Spannzangen 18 vorhanden sind, von denen vorliegend aus Gründen der Übersichtlichkeit nur eine mit einem Bezugszeichen versehen ist. In Figur 1 nach unten schließt sich an den Zuführtisch 12 ein Maschinentisch 20 an, in dem ein Sägeschlitz 22 vorhanden ist. Unterhalb von dem Sägeschlitz 22 ist ein Werkzeugwagen in Form eines Sägewagens 24 längs einer Sägelinie 26 motorisch verfahrbar gehalten. Auf diesen Werkzeugwagen 24 wird weiter unten noch stärker im Detail eingegangen werden.

Oberhalb von der Sägelinie 26 des Maschinentischs 20 ist ein Druckbalken 28 angeordnet. In Figur 1 nach unten hin schließt sich an den Maschinentisch 20 ein beispielhaft aus vier einzelnen Segmenten bestehenden der Entnahmetisch 30 an. Auch hier ist aus Darstellungsgründen lediglich eines der Segmente mit einem Bezugszeichen versehen. Seitlich vom Zuführtisch 12, vom Maschinentisch 20 und von einem Teil des in Figur 1 äußersten rechten Segments des Entnahmetisches 30 ist ein Winkellineal 32 angebracht. Zu der Plattenaufteileinrichtung 10 gehört ferner eine Steuer- und Regeleinrichtung 34, welche den Betrieb der Plattenaufteileinrichtung 10 insgesamt steuert, insbesondere den Programmschieber 16, die Spannzangen 18, den Sägewagen 24 und die darauf angeordneten und weiter unten stärker im Detail beschriebenen Komponenten, sowie den Druckbalken 28 ansteuert.

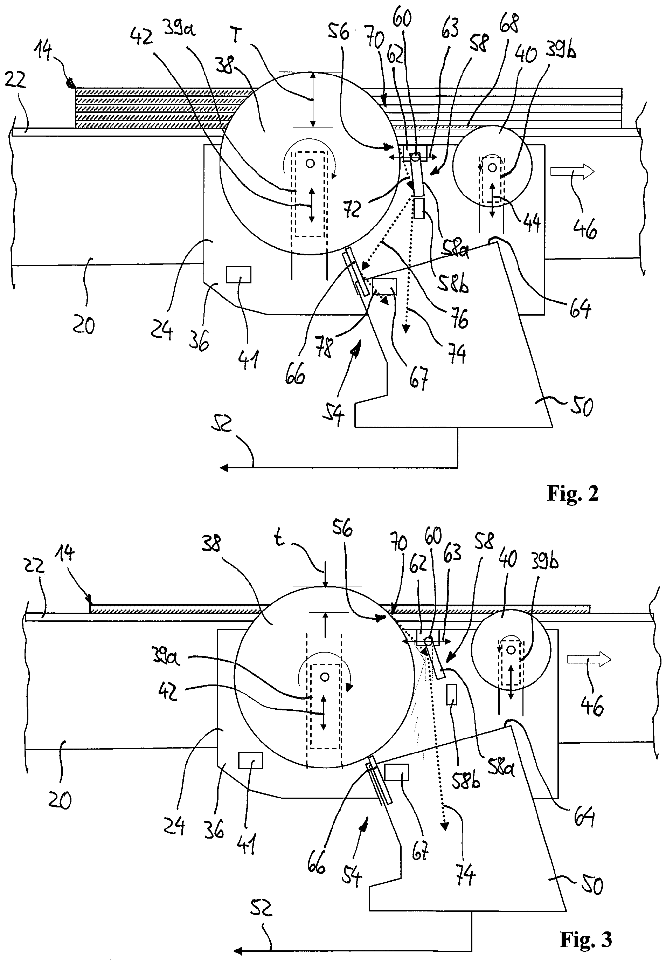

Wie aus den Figuren 2 und 3 hervorgeht, umfasst der Sägewagen 24 eine Tragstruktur 36, die vorliegend beispielsweise insgesamt plattenförmig ist. An der Tragstruktur 36 ist ein rotierendes Werkzeug in Form eines Kreissägeblatts 38 einer Hauptsäge drehbar gehalten, und ist ein weiteres rotierendes Werkzeug in Form eines Vorritzsägeblatts 40 eines Vorritzers drehbar gehalten. Sowohl das Kreissägeblatt 38 als auch das Vorritzsägeblatt 40 sind in vertikaler Richtung beweglich auf jeweiligen Hubschlitten 39a und 39b an der Tragstruktur 36 gehalten und können durch eine nur symbolisch dargestellte Verstelleinrichtung 41 in vertikaler Richtung bewegt werden (Pfeile 42 und 44 ). Sie können ferner mittels nicht dargestellter Antriebsmotoren im Uhrzeigersinn (Kreissägeblatt 38) bzw. entgegen dem Uhrzeigersinn (Vorritzsägeblatt 40) angetrieben werden. Für einen Schnitt wird der Werkzeugwagen 24 in den Figuren 2 und 3 beispielhaft nach rechts bewegt (Pfeil 46).

Durch die vertikale Bewegung insbesondere des Kreissägeblatts 38 kann eine Eintauchtiefe in das Werkstück 14 eingestellt werden. Eine größere Eintauchtiefe T wird dann gewählt, wenn ein vergleichsweise dicker Stapel 14 aus einer Mehrzahl von einzelnen flachen und vergleichsweise dünnen Werkstücken geschnitten werden soll (Figur 2), eine kleinere Eintauchtiefe t wird dann gewählt, wenn beispielsweise nur ein einzelnes dünnes Werkstück 14 geschnitten werden soll (Figur 3).

An dem Werkzeugwagen 24 ist eine Absaugeinrichtung 48 vorhanden, welche einen Absaugstutzen 50 und einen Absaugkanal 52 umfasst, der vorliegend lediglich durch einen Pfeil angedeutet ist. An dem vom Absaugstutzen 50 abgewandten Ende ist der Absaugkanal 52 mit einer nicht dargestellten Absaugeinrichtung, beispielsweise einem Absauggebläse, verbunden. Ferner umfasst die Plattenaufteileinrichtung 10 eine auf dem Werkzeugwagen 24 angeordnete Leiteinrichtung 54, welche wie folgt aufgebaut ist:
In unmittelbarer Nähe zu einer Austrittsstelle 56 des Kreissägeblatts 38 aus dem Werkstück 14 bzw. dem Werkstückstapel 14 umfasst die Leiteinrichtung 54 ein zweiteiliges erstes Leitelement 58, welches bei der in den Figuren 2 und 3 dargestellten Ausführungsform als zweiteilige ebene Platte ausgebildet ist, mit einem ersten Teilelement 58a und einem zweiten Teilelement 58b. Das erste Teilelement 58a ist an seinem in den Figuren oberen Ende durch ein Gelenk 60 schwenkbar an der Tragstruktur 36 gehalten. Mittels eines Antriebs 62 kann ein Winkel des ersten Leitelements 58 gegenüber einer Vertikalen verändert werden. Das zweite Teilelement 58b ist über eine nicht dargestellte Kinematik mit dem ersten Teilelement 58a verbunden, und das zweite Teilelement 58b ist so orientiert, dass eine Flächennormale des zweiten Teilelementes 58b parallel zur Bewegungsrichtung 46 des Sägewagens 24 ist. Bevorzugt ist eine Leitfläche des zweiten Teilelements 58b in der Richtung des Absaugstutzens 50 ausgerichtet. Bei einer Schwenkbewegung des ersten Teilelements 58a wird das zweite Teilelement 58b parallel zur Flächennormalen, in den Figuren also in horizontaler Richtung, verschoben.

Das eine Schwenkachse definierende Gelenk 60 des ersten Teilelements 58a ist zusätzlich translatorisch entsprechend dem Doppelpfeil 63 verschiebbar, sodass der Abstand zwischen Kreissägeblatt 38 und der Leitfläche des ersten Teilelements 58a in jedem Betriebszustand des Kreissägeblatts 38, also in jeder vertikalen Position des Kreissägeblatts 38, nahezu gleich ist. Hierzu ist ein weiterer Antrieb vorhanden, der jedoch nicht gezeichnet ist.

Alternativ zu der oben erwähnten Kinematik, welche die Bewegung des zweiten Teilelements 58b mit jener des ersten Teilelements 58a zwangsweise koppelt, kann das zweite Teilelement 58b über einen eigenen Antrieb verfügen. Beispielsweise kann die Kinematik durch ein Hebelgetriebe, ein Zahnradgetriebe und/oder einen Bowdenzug realisiert sein. Auch eine Übertragung einer Bewegung durch eine entsprechende Hydraulik oder Pneumatik wäre denkbar.

In unmittelbarer Nähe zu einer Einlassöffnung 64 des Absaugstutzens 50 umfasst die Leiteinrichtung 54 ein zweites Leitelement 66, welches in seiner Ebene translatorisch verschieblich ist. Der hierzu vorhandene Antrieb ist lediglich symbolisch dargestellt und trägt das Bezugszeichen 67. Er bildet zusammen mit dem dargestellten Antrieb 62 des ersten Leitelements 58 eine Einstelleinrichtung, mit der eine Position und eine Lage der Leiteinrichtung 54 eingestellt werden können.

Bei einem weiteren und nicht dargestellten Ausführungsbeispiel werden die Leitelemente durch eine nicht dargestellte Kinematik, die beispielweise eine Kulissenführung beinhaltet, die die Leitelemente mit dem Hubschlitten der Hauptsäge verbindet, durch die Verstelleinrichtung angetrieben, welche für die vertikale Verstellung der Hauptsäge sorgt. Auch eine andere Ausgestaltung dieser Kinematik in einer der weiter oben in anderem Zusammenhang erwähnten Arten ist denkbar.

Die Plattenaufteileinrichtung 10 arbeitet folgendermaßen: zur Aufteilung eines Werkstücks 14 oder eines Werkstückstapels 14 wird dieser an einem in Vorschubrichtung gesehen hinteren Rand von einigen der Spannzangen 18 des Programmschiebers 16 gegriffen und auf dem Zuführtisch 12 liegend in Richtung Maschinentisch 20 bzw. Sägelinie 26 gefördert (Figur 1). In einer gewünschten Position des Werkstücks 14 bzw. des Werkstückstapels 14 relativ zu der Sägelinie 26 wird der Programmschieber 16 angehalten, und der Druckbalken 28 wird abgesenkt, wodurch das Werkstück 14 bzw. der Werkstückstapel 14 zwischen dem Druckbalken 28 und dem Maschinentisch 20 verklemmt ist. S. 17

Nun werden das Kreissägeblatt 38 und das Vorritzsägeblatt 40 aus jeweiligen abgesenkten Ruhelagen in die in den Figuren 2 und 3 oberen Arbeitslagen längs der Pfeile 42 und 44 verschoben, so dass bei dem anschließenden Bearbeitungsvorgang eine gewünschte Eintauchtiefe T bzw. t vorliegt. Dann wird das Gebläse der Absaugeinrichtung 48 in Gang gesetzt, und es werden das Kreissägeblatt 38 und das Vorritzsägeblatt 40 in Drehung versetzt, und der Werkzeugwagen 24 wird längs des Pfeils 46 bewegt. Auf diese Weise wird zunächst vom Vorritzsägeblatt 38 eine Vorritznut 68 in die Unterseite des Werkstücks 14 bzw. des Werkstückstapels 14 eingeschnitten, und danach wird vom Kreissägeblatt 38 der eigentliche Trennschnitt durchgeführt.

Ein Sägevorgang durch einen relativ dicken Werkstückstapel 14 ist, wie bereits oben erwähnt wurde, in Figur 2 dargestellt. Die Eintauchtiefe T des Kreissägeblatts 38 in den Werkstückstapel 14 ist vergleichsweise groß. Entsprechend ist die Leiteinrichtung 54 so angesteuert, dass sich das erste Teilelement 58a des ersten Leitelements 58 in einer beinahe, jedoch nicht ganz vertikalen Lage befindet, dass sich das zweite Teilelement 58b des ersten Leitelements 58 unmittelbar unterhalb eines unteren Randes des ersten Teilelements 58a befindet, und dass sich das zweite Leitelement 66 in einer von der Einlassöffnung 64 des Absaugstutzens 50 vergleichsweise entfernten Position befindet.

Bei dem Trennschnitt durch das Kreissägeblatt 38 wird ein durch einen punktierten Pfeil angedeuteter Strahl von bei dem Bearbeitungsvorgang erzeugten Partikeln, insbesondere Spänen, erzeugt, der sich von einem Bearbeitungsbereich 70 bzw. von der Austrittsstelle 56 des Kreissägeblatts 38 aus der Unterseite des Werkstücks 14 bzw. des Werkstückstapels 14 aus in einer ersten Flugrichtung 72 erstreckt. Er trifft auf das erste Leitelement 58 und wird von diesem längs einer zweiten Flugrichtung 74 in die Einlassöffnung 64 des Absaugstutzen 50 abgelenkt. Dabei wird durch das zweite Leitelement 66 verhindert, dass sich von dem ersten Leitelement 58 abgelenkte Partikel durch den zwischen der Einlassöffnung 64 und dem Kreissägeblatt 38 ansonsten vorhandenen Spalt von der Einlassöffnung 64 weg bewegen.

Es gibt aber auch Partikel, die von dem ersten Leitelement 58 nicht direkt in Richtung zum Absaugstutzen 50 gelenkt werden, sondern die zunächst in eine Zwischenrichtung 76 abgelenkt werden, und dann von dem zweiten Leitelement 66 ebenfalls in einer dritten Flugrichtung 78 in Richtung zur Einlassöffnung 64 des Absaugstutzens 50 abgelenkt werden.

In Figur 3 ist, wie oben bereits erwähnt wurde, ein Sägevorgang durch ein einzelnes vergleichsweise dünnes Werkstück 14 dargestellt. Die Eintauchtiefe t ist somit vergleichsweise gering. Entsprechend wird der Antrieb 62 so angesteuert, dass das erste Teilelement 58a des ersten Leitelements 58 gegenüber der Vertikalen einen größeren Winkel aufspannt als in der in Figur 2 gezeigten Betriebslage. Hierdurch wird das zweite Teilelement 58b des ersten Leitelements 58 in eine in Figur 3 rechte Position translatorisch verschoben. Das zweite Leitelement 66 befindet sich in einer in den Absaugstutzen 50 maximal eingeschobenen Position.

Man erkennt, dass die erste Flugrichtung 72 des Partikelstrahls nun eine größere horizontale Komponente hat als bei der in Figur 2 gezeigten Betriebssituation, und dass der Partikelstrahl daher weiter oben auf das erste Teilelement 58a des ersten Leitelements 58 auftrifft. Indem das erste Teilelement 58a des ersten Leitelements 58 gegenüber der Vertikalen einen größeren Winkel aufspannt als in der in Figur 2 gezeigten Betriebslage, wird verhindert, dass der Partikelstrahl entlang der ersten Flugrichtung 72 einfach von dem ersten Leitelement 58 abprallt und beispielsweise auf die Sägezähne des sich drehenden Kreissägeblatts gelenkt wird. Vielmehr wird er in der zweiten Flugrichtung 74 ebenfalls in Richtung zum Absaugstutzen 50 gelenkt.

Man erkennt aus der obigen Beschreibung, dass insoweit die Position und die Lage der Komponenten, nämlich des ersten Leitelements 58 und des zweiten Leitelements 66, der Leiteinrichtung 54 von einer Werkzeugeigenschaft, nämlich der Eintauchtiefe T bzw. t des Werkzeugs, also des Kreissägeblatts 38, in das Werkstück 14 bzw. den Werkstückstapel 14 abhängt. Man erkennt ferner, dass sich die erste Flugrichtung 72 ändert, wenn die Eintauchtiefe T bzw. t des Kreissägeblatts 38 in das Werkstück 14 bzw. den Werkstückstapel 14 verändert wird. Das zweite Leitelement 66 könnte zusätzlich auch schwenkbar gelagert werden, um seine Position entsprechend der durch die Eintauchtiefe des Kreissägeblatts 38 bedingte Flugrichtung der Partikel anzupassen. Die Schwenkachse kann beispielweise an der dem Absaugstutzen 50 zugewandten Seite angeordnet werden und in Richtung zum Hauptsägeblatt 38 hin translatorisch verschiebbar sein. Die vom Absaugstutzen 50 abgewandte Seite des zweiten Leitelements 66 könnte dann beispielsweise durch eine Kulissenführung geführt werden.

Die Antriebe 62, 67 können beispielsweise Elektromotoren umfassen, die von der Steuer- und Regeleinrichtung 34 abhängig von der mittels der Verstelleinrichtung des Kreissägeblatts 38 eingestellten Eindringtiefe T bzw. t angesteuert werden. In diesem Fall kann man von einer elektrischen Koppelung des Antriebs 62 mit der Verstelleinrichtung 41 sprechen. Der Antrieb 62 kann aber genauso gut mechanisch durch eine entsprechende Kinematik mit der Verstelleinrichtung 41 gekoppelt sein, welche das Kreissägeblatt 38 in vertikaler Richtung verstellt. Beispielsweise kann die Kinematik durch ein Hebelgetriebe, ein Zahnradgetriebe und/oder einen Bowdenzug realisiert sein. Auch eine Übertragung einer Bewegung durch eine entsprechende Hydraulik oder Pneumatik wäre denkbar.

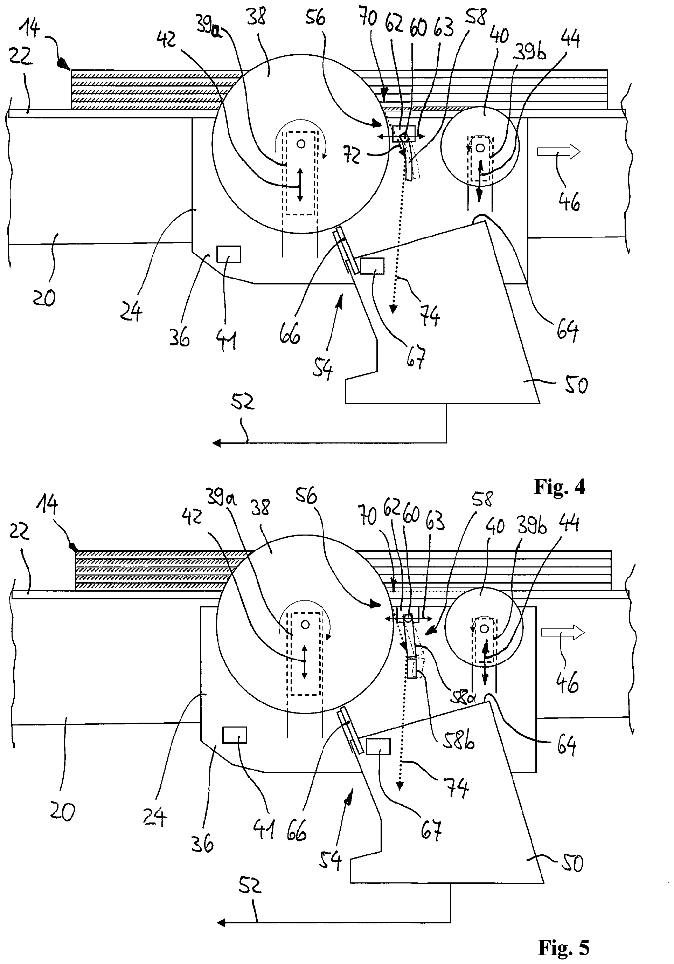

In Figur 4 ist eine alternative Ausführungsform der Leiteinrichtung 54 dargestellt. Anstelle eines flachen und ebenen ersten Leitelements, wie es in den Figuren 2 und 3 dargestellt war, ist in Figur 4 ein vom Kreissägeblatt 38 aus gesehen konkav gekrümmtes Leitelement 58 gezeigt.

Dessen Schwenklage ist durch durchgezogene Linien für die dargestellte große Eindringtiefe T des Kreissägeblatts 38 gezeichnet (entsprechend Figur 2), wohingegen sie mit strichpunktierten Linien für eine vergleichsweise geringe Eindringtiefe t gezeichnet ist, entsprechend Figur 3.

In Figur 5 ist eine weitere alternative Ausführungsform der Leiteinrichtung 54 gezeigt. Bei dieser kann der Winkel zwischen dem ersten Teilelement 58a und dem zweiten Teilelement 58b des ersten Leitelements 58 verändert werden, es kann also quasi die Krümmung des ersten Leitelements 58 abhängig von der Eindringtiefe T bzw. t verändert werden. Wiederum ist eine Betriebssituation mit einer vergleichsweise großen Eindringtiefe T des Kreissägeblatts 38 mit durchgezogenen Linien gezeichnet (entsprechend Figur 2), wohingegen mit strichpunktierte Linien eine Betriebssituation für eine vergleichsweise geringe Eindringtiefe t gezeichnet ist, entsprechend Figur 3.

Die Leiteinrichtung 54 kann bei allen Ausführungsformen einen zusätzlichen Antrieb (pneumatisch oder mechanisch) beinhalten, der beim Werkzeugwechselvorgang betätigt werden kann, um eine bessere Zugänglichkeit zum Werkzeug zu ermöglichen. Der Antrieb kann auch mit einer Werkzeugwechselklappe mechanisch oder steuerungstechnisch verbunden sein.

## Patentansprüche

1. Plattenaufteileinrichtung (10), mit der großformatige Platten aufgeteilt werden können, , mit mindestens einem rotierenden Werkzeug (38) in Form eines Kreissägeblatts oder eines Fräsers und einer Leiteinrichtung (54), welche mindestens einen Teil von Partikeln, die bei der Plattenaufteilung durch das rotierende Werkzeug (38) in einem Bearbeitungsbereich (70) erzeugt werden und sich von dem Bearbeitungsbereich (70) in einer ersten Flugrichtung (72) weg bewegen, aus der ersten Flugrichtung (72) mindestens mittelbar in eine zweite Flugrichtung (74) lenkt, wobei eine Position und/oder Lage der Leiteinrichtung (54) mittels einer Einstelleinrichtung (62, 67) einstellbar ist, **dadurch gekennzeichnet, dass** die Position und/oder Lage der Leiteinrichtung (54) abhängig von einer Werkzeugeigenschaft und/oder einer Werkstückeigenschaft einstellbar ist, so dass die Partikel von der Leiteinrichtung (54) in einer gewünschten Weise, beispielsweise in eine bestimmte Richtung bzw. zu einem gewünschten Ort hin, abgelenkt werden.

2. Plattenaufteileinrichtung (10) nach Anspruch 1, **dadurch gekennzeichnet, dass** die Werkzeugeigenschaft eine Eintauchtiefe (T, t) des Werkzeugs (38) in das Werkstück (14), eine Drehgeschwindigkeit des Werkzeugs (38), eine Vorschubgeschwindigkeit des Werkzeugs (38), eine Abmessung des Werkzeugs und/oder eine Geometrie des Werkzeugs, insbesondere eine Geometrie einer Schneide oder eines Sägeblattzahns, ist und dass die Werkstückeigenschaft eine Art eines Werkstückmaterials, eine Dichte des Werkstückmaterials und/oder eine Abrasivität des Werkstückmaterials ist.

3. Plattenaufteileinrichtung (10) nach einem der vorhergehenden Ansprüche, **dadurch gekennzeichnet, dass** mittels einer Verstelleinrichtung (41) eine Eintauchtiefe (T, t) eines Kreissägeblatts (38) oder des Fräsers in das Werkstück (14) eingestellt werden kann, wodurch sich die erste Flugrichtung (72) ändert.

4. Plattenaufteileinrichtung (10) nach Anspruch 3, **dadurch gekennzeichnet, dass** sie einen Werkzeugwagen (24) umfasst, an dem das Werkzeug (38) drehbar angeordnet ist und der relativ zum Werkstück (14) beweglich ist, und dass die Leiteinrichtung (54) an dem Werkzeugwagen (24) angeordnet ist.

5. Plattenaufteileinrichtung (10) nach einem der vorhergehenden Ansprüche, **dadurch gekennzeichnet, dass** die Leiteinrichtung (54) eine Mehrzahl von plattenförmigen, insbesondere geraden und/oder wenigstens abschnittsweise gekrümmten Leitelementen (58, 66) umfasst.

6. Plattenaufteileinrichtung (10) nach Anspruch 5, **dadurch gekennzeichnet, dass** die Leiteinrichtung (54) mindestens ein erstes Leitelement (58) in unmittelbarer Nähe zu einer Austrittstelle (56) des Werkzeugs (38) aus dem Werkstück (14) umfasst.

7. Plattenaufteileinrichtung (10) nach einem der Ansprüche 5 oder 6, **dadurch gekennzeichnet, dass** die Leiteinrichtung (54) mindestens ein zweites Leitelement (66) in unmittelbarer Nähe zu einem gewünschten Ort, zu dem die Partikel gelenkt werden sollen, insbesondere zu einer Einlassöffnung (64) einer Absaugeinrichtung (48), umfasst.

8. Plattenaufteileinrichtung (10) nach Anspruch 7 in Verbindung mit Anspruch 6, **dadurch gekennzeichnet, dass** das erste Leitelement (58) so ausgebildet und anordenbar ist, dass es wenigstens zweitweise Partikel aus der ersten Richtung (72) in eine Zwischenrichtung (76) umlenkt, und dass das zweite Leitelement (66) so ausgebildet und anordenbar ist, dass es die in die Zwischenrichtung (76) umgelenkten Partikel in die zweite Richtung (74), insbesondere einer Einlassöffnung (64) einer Absaugeinrichtung (48), hin umlenkt.

9. Plattenaufteileinrichtung (10) nach Anspruch 8, **dadurch gekennzeichnet, dass** das erste Leitelement und/oder das zweite Leitelement (66) translatorisch verschieblich und /oder schwenkbar ist.

10. Plattenaufteileinrichtung (10) nach einem der vorhergehenden Ansprüche, **dadurch gekennzeichnet, dass** die Einstelleinrichtung (62, 67) der Leiteinrichtung (54) mit der Verstelleinrichtung (41) des Werkzeugs (38) mechanisch oder elektrisch oder pneumatisch oder hydraulisch gekoppelt ist.

11. Plattenaufteileinrichtung (10) nach einem der vorhergehenden Ansprüche, **dadurch gekennzeichnet, dass** die Leiteinrichtung (54) mindestens einen Antrieb (62, 67) umfasst.

12. Plattenaufteileinrichtung (10) nach Anspruch 11, **dadurch gekennzeichnet, dass** der Antrieb (62, 67) von einer Steuer- und/oder Regeleinrichtung (34) in Abhängigkeit von der Werkstückeigenschaft und/oder der Werkzeugeigenschaft, insbesondere abhängig von einer Eintauchtiefe (T, t) des Werkzeugs (38) in das Werkstück (14), einer Drehgeschwindigkeit des Werkzeugs (38), einer Vorschubgeschwindigkeit des Werkzeugs (38), einer Abmessung des Werkzeugs und/oder einer Geometrie des Werkzeugs, insbesondere einer Geometrie einer Schneide oder eines Sägeblattzahns, einer Art eines Werkstückmaterials, einer Dichte des Werkstückmaterials und/oder einer Abrasivität des Werkstückmaterials ansteuerbar ist.

13. Plattenaufteileinrichtung (10) nach einem der vorhergehenden Ansprüche, **dadurch gekennzeichnet, dass** die Leiteinrichtung (54) zwischen einer Hauptsäge (38) und einer Vorritzsäge (40) angeordnet ist.

14. Plattenaufteileinrichtung nach einem der vorhergehenden Ansprüche, **dadurch gekennzeichnet, dass** einer Hauptsäge und einer Vorritzsäge jeweils mindestens eine eigene Leiteinrichtung zugeordnet ist.

15. Plattenaufteileinrichtung nach einem der vorhergehenden Ansprüche, **dadurch gekennzeichnet, dass** einer Hauptsäge und einer Vorritzsäge mindestens eine gemeinsame Leiteinrichtung zugeordnet ist.

16. Verfahren zum Aufteilen großformatiger Platten mittels einer Plattenaufteileinrichtung (10) nach Anspruch 1, bei dem ein Werkstück (14) mittels mindestens eines rotierenden Werkzeugs (38) in Form in Form eines Kreissägeblatts oder eines Fräsers aufgeteilt wird, und bei dem mindestens ein Teil von Partikeln, die bei der Werkstückbearbeitung durch das rotierende Werkzeug (38) in einem Bearbeitungsbereich (70) erzeugt werden und sich von dem Bearbeitungsbereich (70) in einer ersten Flugrichtung (72) weg bewegen, mittels einer Leiteinrichtung (54) aus der ersten Flugrichtung (72) mindestens mittelbar in eine zweite Flugrichtung (74) gelenkt wird, **dadurch gekennzeichnet, dass** eine Position und/oder Lage der Leiteinrichtung (54) abhängig von einer Werkzeugeigenschaft und/oder einer Werkstückeigenschaft eingestellt wird.

## Claims

1. Panel dividing device (10) with which large-format panels can be divided, comprising at least one rotating tool (38) in the form of a circular saw blade or a milling cutter and a guide device (54) which guides at least some of the particles that are produced during panel dividing by the rotating tool (38) in a processing region (70) and, in a first direction of flight (72), move away from the processing region (70) from the first direction of flight (72) at least indirectly in a second direction of flight (74), a position and/or location of the guide device (54) being adjustable by means of an adjustment device (62, 67), **characterized in that** the position and/or location of the guide device (54) can be adjusted depending on a tool property and/or a workpiece property, so that the particles can be deflected by the guide device (54) in a desired manner, for example in a specific direction or toward a desired location.

2. Panel dividing device (10) according to claim 1, **characterized in that** the tool property is an immersion depth (T, t) of the tool (38) into the workpiece (14), a rotational speed of the tool (38), a feed speed of the tool (38), a dimension of the tool and/or a geometry of the tool, in particular a geometry of a cutting edge or a saw blade tooth, and **in that** the workpiece property is a type of workpiece material, a density of the workpiece material and/or an abrasiveness of the workpiece material.

3. Panel dividing device (10) according to either of the preceding claims, **characterized in that** an immersion depth (T, t) of a circular saw blade (38) or the milling cutter in the workpiece (14) can be adjusted by means of a setting device (41), as a result of which the first direction of flight (72) changes.

4. Panel dividing device (10) according to claim 3, **characterized in that** it comprises a tool carriage (24) on which the tool (38) is rotatably arranged and which can be moved relative to the workpiece (14), and **in that** the guide device (54) is arranged on the tool carriage (24).

5. Panel dividing device (10) according to any of the preceding claims, **characterized in that** the guide device (54) comprises a plurality of planar, in particular straight and/or at least partially curved guide elements (58, 66).

6. Panel dividing device (10) according to claim 5, **characterized in that** the guide device (54) comprises at least one first guide element (58) in the immediate vicinity of an exit point (56) of the tool (38) from the workpiece (14).

7. Panel dividing device (10) according to claim 5 or claim 6, **characterized in that** the guide device (54) has at least one second guide element (66) in the immediate vicinity of a desired location to which the particles are to be guided, in particular to an inlet opening (64) of a suction device (48).

8. Panel dividing device (10) according to claim 7 in conjunction with claim 6, **characterized in that** the first guide element (58) is designed and can be arranged in such a way that it at least temporarily deflects particles from the first direction (72) into an intermediate direction (76), and **in that** the second guide element (66) is designed and can be arranged in such a way that it deflects the particles deflected in the intermediate direction (76) in the second direction (74), in particular of an inlet opening (64) of a suction device (48).

9. Panel dividing device (10) according to claim 8, **characterized in that** the first guide element and/or the second guide element (66) can be displaced and/or pivoted in a translational manner.

10. Panel dividing device (10) according to any of the preceding claims, **characterized in that** the adjustment device (62, 67) of the guide device (54) is mechanically or electrically or pneumatically or hydraulically coupled to the setting device (41) of the tool (38).

11. Panel dividing device (10) according to any of the preceding claims, **characterized in that** the guide device (54) comprises at least one drive (62, 67).

12. Panel dividing device (10) according to claim 11, **characterized in that** the drive (62, 67) can be controlled by an open-loop and/or closed-loop device (34) depending on the workpiece property and/or the tool property, in particular depending on an immersion depth (T, t) of the tool (38) into the workpiece (14), a rotational speed of the tool (38), a feed speed of the tool (38), a dimension of the tool and/or a geometry of the tool, in particular a geometry of a cutting edge or a saw blade tooth, a type of workpiece material, a density of the workpiece material and/or an abrasiveness of the workpiece material.

13. Panel dividing device (10) according to any of the preceding claims, **characterized in that** the guide device (54) is arranged between a main saw (38) and a scoring saw (40).

14. Panel dividing device according to any of the preceding claims, **characterized in that** a main saw and a scoring saw are each assigned at least one separate guide device.

15. Panel dividing device according to any of the preceding claims, **characterized in that** a main saw and a scoring saw are assigned at least one common guide device.

16. Method for dividing large-format panels by means of a panel dividing device (10) according to claim 1, in which method a workpiece (14) is divided by means of at least one rotating tool (38) in the form of a circular saw blade or a milling cutter, and in which method at least some of the particles that are produced during workpiece machining by the rotating tool (38) in a processing region (70) and, in a first direction of flight (72), move away from the processing region (70) from the first flight direction (72) are guided at least indirectly in a second direction of flight (74) by means of a guide device (54), **characterized in that** a position and/or location of the guide device (54) is adjusted depending on a tool property and/or a workpiece property.

## Revendications

1. Dispositif à diviser des panneaux (10) permettant de diviser des panneaux de grand format, comprenant au moins un outil rotatif (38) sous la forme d'une lame de scie circulaire ou d'une fraise ainsi qu'un dispositif de guidage (54) qui guide au moins une partie de particules lesquelles sont produites pendant la division de panneaux par l'outil rotatif (38) dans une zone d'usinage (70) et s'éloignent de la zone d'usinage (70) dans une première direction de vol (72), à partir de la première direction de vol (72) au moins indirectement dans une deuxième direction de vol (74), dans lequel une position et/ou une orientation du dispositif de guidage (54) peut être réglée au moyen d'un dispositif de réglage (62, 67), **caractérisé par le fait que** la position et/ou l'orientation du dispositif de guidage (54) peut être réglée en fonction d'une propriété de l'outil et/ou d'une propriété de la pièce de sorte que les particules sont déviées d'une manière souhaitée, par exemple dans une direction déterminée ou bien vers un endroit souhaité.

2. Dispositif à diviser des panneaux (10) selon la revendication 1, **caractérisé par le fait que** la propriété de l'outil est une profondeur de pénétration (T, t) de l'outil (38) dans la pièce (14), une vitesse de rotation de l'outil (38), une vitesse d'avance de l'outil (38), une dimension de l'outil et/ou une géométrie de l'outil, en particulier une géométrie d'un tranchant ou d'une dent de lame de scie, et que la propriété de la pièce est un type d'un matériau de pièce, une densité du matériau de pièce et/ou une abrasivité du matériau de pièce.

3. Dispositif à diviser des panneaux (10) selon l'une quelconque des revendications précédentes, **caractérisé par le fait qu'**une profondeur de pénétration (T, t) d'une lame de scie circulaire (38) ou de la fraise dans la pièce (14) peut être réglée au moyen d'un dispositif d'ajustage (41) ce par quoi la première direction de vol (72) change.

4. Dispositif à diviser des panneaux (10) selon la revendication 3, **caractérisé par le fait qu'**il comprend un chariot porte-outil (24) sur lequel l'outil (38) est disposé à rotation et qui peut être déplacé par rapport à la pièce (14), et que le dispositif de guidage (54) est disposé sur le chariot porte-outil (24).

5. Dispositif à diviser des panneaux (10) selon l'une quelconque des revendications précédentes, **caractérisé par le fait que** le dispositif de guidage (54) comprend une pluralité d'éléments de guidage (58, 66) en forme de plaque, en particulier droits et/ou courbés au moins par sections.

6. Dispositif à diviser des panneaux (10) selon la revendication 5, **caractérisé par le fait que** le dispositif de guidage (54) comprend au moins un premier élément de guidage (58) à proximité immédiate d'un point de sortie (56) de l'outil (38) de la pièce (14).

7. Dispositif à diviser des panneaux (10) selon l'une quelconque des revendications 5 ou 6, **caractérisé par le fait que** le dispositif de guidage (54) comprend au moins un deuxième élément de guidage (66) à proximité immédiate d'un endroit souhaité vers lequel les particules doivent être guidées, en particulier vers une ouverture d'entrée (64) d'un dispositif d'aspiration (48).

8. Dispositif à diviser des panneaux (10) selon la revendication 7 en liaison avec la revendication 6, **caractérisé par le fait que** ledit premier élément de guidage (58) est conçu et peut être disposé de telle manière qu'il dévie au moins temporairement des particules de la première direction (72) dans une direction intermédiaire (76), et que ledit deuxième élément de guidage (66) est conçu et peut être disposé de telle manière qu'il dévie les particules déviées dans la direction intermédiaire (76), dans la deuxième direction (74), en particulier une ouverture d'entrée (64) d'un dispositif d'aspiration (48).

9. Dispositif à diviser des panneaux (10) selon la revendication 8, **caractérisé par le fait que** le premier élément de guidage et/ou le deuxième élément de guidage (66) est déplaçable en translation et/ou peut pivoter.

10. Dispositif à diviser des panneaux (10) selon l'une quelconque des revendications précédentes, **caractérisé par le fait que** le dispositif de réglage (62, 67) du dispositif de guidage (54) est couplé de manière mécanique ou électrique ou pneumatique ou hydraulique au dispositif d'ajustage (41) de l'outil (38).

11. Dispositif à diviser des panneaux (10) selon l'une quelconque des revendications précédentes, **caractérisé par le fait que** le dispositif de guidage (54) comporte au moins un mécanisme d'entraînement (62, 67).

12. Dispositif à diviser des panneaux (10) selon la revendication 11, **caractérisé par le fait que** le mécanisme d'entraînement (62, 67) peut être commandé par un dispositif de commande et/ou de régulation (34) en fonction de la propriété de la pièce et/ou de la propriété de l'outil, en particulier en fonction d'une profondeur de pénétration (T, t) de l'outil (38) dans la pièce (14), d'une vitesse de rotation de l'outil (38), d'une vitesse d'avance de l'outil (38), d'une dimension de l'outil et/ou d'une géométrie de l'outil, en particulier d'une géométrie d'un tranchant ou d'une dent de lame de scie, d'un type de matériau de pièce, d'une densité du matériau de pièce et/ou d'une abrasivité du matériau de pièce.

13. Dispositif à diviser des panneaux (10) selon l'une quelconque des revendications précédentes, **caractérisé par le fait que** le dispositif de guidage (54) est agencé entre une scie principale (38) et une scie à inciser (40).

14. Dispositif à diviser des panneaux (10) selon l'une quelconque des revendications précédentes, **caractérisé par le fait que** respectivement au moins un propre dispositif de guidage est associé à une scie principale et à une scie à inciser.

15. Dispositif à diviser des panneaux (10) selon l'une quelconque des revendications précédentes, **caractérisé par le fait qu'**au moins un dispositif de guidage commun est associé à une scie principale et à une scie à inciser.

16. Procédé destiné à diviser des panneaux de grand format au moyen d'un dispositif à diviser des panneaux (10) selon la revendication 1, dans lequel une pièce (14) est divisée au moyen d'au moins un outil rotatif (38) sous la forme d'une lame de scie circulaire ou d'une fraise et dans lequel au moins une partie de particules lesquelles sont produites pendant l'usinage de pièce par l'outil rotatif (38) dans une zone d'usinage (70) et s'éloignent de la zone d'usinage (70) dans une première direction de vol (72), sont guidées au moyen d'un dispositif de guidage (54) à partir de la première direction de vol (72) au moins indirectement dans une deuxième direction de vol (74), **caractérisé par le fait qu'**une position et/ou une orientation du dispositif de guidage (54) est réglée en fonction d'une propriété de l'outil et/ou d'une propriété de la pièce.
